# EUROPEAN PATENT SPECIFICATION

(11) **EP 2 392 548 B1**
(45) Date of publication and mention of the grant of the patent: **24.07.2013**
(21) Application number: 11163733.6
(22) Date of filing: 26.04.2011
(51) Int. Cl.: B01J 21/12, B01J 35/00, B01J 37/03, C01B 33/26

(54) **Process for preparing an amorphous silica-alumina composition and relative amorphous silica-alumina composition**
Verfahren zur Herstellung einer amorphen Aluminiumoxid-Silikazusammensetzung und dazugehörige amorphe Aluminiumoxid-Silikazusammensetzung
Procédé de préparation de composition de silice-alumine amorphe et composition de silice-alumine amorphe associée

(30) Priority: 26.04.2010 IT MI20100713
(43) Date of publication of application: 07.12.2011
(73) Proprietor: SASOL ITALY S.p.A., 20124 Milan (IT)
(72) Inventor: RabaioIi, Maria Roberta, 21052 Busto Arsizio (VA) (IT); Clerici, Roberto, 21026 Gavirate (VA) (IT)
(74) Representative: Finetti, Claudia

(56) References cited:
- EP-A1- 0 376 406
- EP-A1- 0 558 173
- WO-A1-2009/029579
- US-A- 3 949 059
- US-A1- 2004 092 383
- HENSEN E J M ET AL: "Formation of acid sites in amorphous silica-alumina", JOURNAL OF CATALYSIS, ACADEMIC PRESS, DULUTH, MN, US, vol. 269, no. 1, 1 January 2010 (2010-01-01), pages 201-218, XP026815780, ISSN: 0021-9517 [retrieved on 2009-12-11]
- SNEL R: "Control of the porous structure of amorphous silica-alumina", APPLIED CATALYSIS, AMSTERDAM, NL, vol. 11, no. 2, 1 January 1984 (1984-01-01), pages 271-280, XP002985082, ISSN: 0166-9834, DOI: DOI:10.1016/S0166-9834(00)81885-0

## Description

The present invention relates to a process for preparing an amorphous silica-alumina composition and the relative composition of amorphous silica-alumina.

Compounds such as silica, alumina and their amorphous mixtures (silica-alumina) are catalysts widely used in conversion reactions of hydrocarbons, such as oligomerization and hydrocracking reactions. Thanks to the porous structure and high surface area which characterizes them, these compounds (in particular amorphous silica-alumina) can be used as both catalysts and as carriers for metal catalysts. In the case of hydrocracking reactions, for example, one of the most widely-used catalysts on an industrial scale is a bi-functional catalyst consisting of one or more metals uniformly distributed in a silica-alumina carrier. In this catalyst, the metal component catalyzes the hydrogenation reaction, whereas the silica-alumina, thanks to its acidity characteristics, catalyzes the cracking reaction.

Amorphous silica-alumina compositions have surface acid sites which are generally weaker than the acid sites of zeolites. This moderate acidity allows silica-alumina-based catalysts to be used only at a high temperature and at low space velocities.

Amorphous silica-alumina compositions also have a wide distribution of the pore dimensions. This allows to obtain a high diffusion rate of the reagent molecules (a particularly advantageous characteristic in the case of conversion processes of heavy hydrocarbon feedstocks) and to provide an ample surface area capable of receiving and effectively dispersing the possible metal component of the catalyst.

Numerous process for preparing a wide variety of forms of amorphous silica-alumina are known in the state of the art. It is also known that the specific operating conditions applied for the preparation significantly influence the catalytic and physico-chemical properties of the silica-alumina obtained, such as for example the pore structure, their overall volume, the surface area and the acidity characteristics.

The processes known in the state of the art for preparing amorphous silica-alumina compositions generally provide for the mixing of aqueous solutions of inorganic or organic compounds of silicon and aluminium under different reaction conditions.

The document US 2004/0092390 A1, for example, describes a process for preparing an amorphous silica-alumina composition with a high homogeneity, starting from an acid sol containing sodium silicate and an aluminium salt. The silica-alumina is obtained by co-precipitation through the addition of a basifying agent to the acid sol. With this process, however, a silica-alumina is obtained having a rather low total pore volume (within the range of 0.5-0.8 cm³/g) and in which over 90% of this total volume is due to small-sized pores (pore diameter within the range of 40-100 Å).

The patent US 4,499,197 describes a process for the preparation of an amorphous silica-alumina co-gel possibly containing a rare earth co-gel. The process provides the preparation of a solution of an aluminate and a silicate to form a pre-gel and the subsequent reaction of the pre-gel with a solution containing a salt of aluminium and/or rare earth. The process can be applied within a wide range of SiO₂/Al₂O₃ weight ratios. After a treatment at 1,350 F (732°C) in the presence of vapour (8 hours), the silica-alumina co-gel obtained has 30-60% of the surface area due to pores having a diameter within the range of 40-100 Å.

The patent US 4,310,441 describes a process for the preparation of an amorphous silica-alumina gel with a high porosity. Also in this case, the gels have a rather low total pore volume (about 0.8 cm³/g), substantially due to pores having a diameter varying within a wide range of dimensions (20-600 Å) . The high porosity however is obtained after subjecting the gel to extrusion and subsequent calcination.

The paper by Hensen et al. (J. Catal., vol. 269, 1, 2010) discloses a plurality of amorphous silica-alumina compositions (ASAs) prepared by homogeneous deposition-precipitation of aluminium on a silica surface. The method of preparation does not include the use of a gelation initiator in the reactant mixture.

WO 2009/029579 A1 discloses an aromatic hydrogenation catalyst comprising an ASA support composition having a macroporosity (pore diameter greater than 350 Å) greater than 51%.

EP 0558173 Al discloses the use of ASA composition having a high surface area (> 400 m²/g) and a high pore volume (> 1,28 cc/g) as adsorbent for removing chlorophyll from glyceride oils.

Even though, through the use of processes known in the state of the art, it is possible to prepare amorphous silica-alumina having predetermined catalytic and physico-chemical properties, the possibilities of modulating these properties according to the demands of the user, remain, however, rather limited.

Furthermore, as is well known to experts in the field, also minimum variations in the sequence of operative phases lead to the production of a silica-alumina having unpredictable catalytic and physico-chemical properties.

The objective of the present invention is to overcome the drawbacks indicated by the state of the art. In particular, an objective of the present invention is to find a process for preparing an amorphous silica-alumina composition which is extremely homogeneous, having a high porosity and a high acidity within a wide range of Si/Al weight ratios.

An object of the present invention therefore relates to a process for preparing an amorphous silica-alumina composition comprising the following operative phases:
a) mixing an aqueous solution comprising a silicon compound and an aqueous solution comprising an aluminium compound, in the presence of a gelification initiator comprising alumina hydrate having the general formula Al₂O₃ · nH₂O, wherein n varies from 1 to 3, and obtaining a silica-alumina sol,
b) adding a base precipitating agent to said silica-alumina sol and co-precipitating a silica-alumina composition.

A second object of the present invention relates to an amorphous silica-alumina composition according to claim 15.

A third object of the present invention relates to a catalyst for a conversion reaction of hydrocarbons comprising an amorphous silica-alumina composition according to claim 15.

A further object of the present invention relates to the use of finely subdivided alumina hydrate as gelification initiator in the above synthesis process of an amorphous silica-alumina composition.

The Applicant has surprisingly found that with the process, object of the present invention, it is possible to prepare a silica-alumina composition having an amorphous structure, which is extremely homogenous and having a high porosity within a wide range of Si/Al weight ratios.

The silica-alumina compositions, object of the present invention, are essentially amorphous to X-rays and do not have other crystalline phases (for example bohemite), except for traces which can be detected by X-ray diffractometry.

The amorphous silica-alumina compositions (hereinafter also indicated with the term "silica-alumina"), object of the present invention, have a porous structure characterized by a high total pore volume and a distribution of the pore dimensions wherein a significant pore fraction has a diameter higher than 100 Å, preferably ranging from 200 Å to 300 Å.

The amorphous silica-alumina compositions also have a high surface area (also higher than 400 m²/g) and stronger acid sites with respect to the silica-alumina compositions known in the state of the art. These physico-chemical characteristics make the silica-alumina compositions, object of the present invention, particularly suitable as catalysts or catalyst carriers within a wide variety of industrial processes.

The process, object of the present invention, also has the advantage of being easy to effect and allowing the preparation of an amorphous silica-alumina composition with the above physico-chemical characteristics within a wide range of Si/Al ratios.

For a better understanding of the characteristics of the present invention in the description, reference is made to the following figures:
- figures 1a, 1b and 1c: X-ray diffractometric analysis of the silica-alumina compositions of Examples 1, 2 and 4 (EX1, EX2 and EX4);
- figure 2: X-ray diffractometric analysis of the silica-alumina of Example 3 (EX3);
- figure 3: cumulative desorption curves of N₂ (model BJH) of the silica-alumina compositions of Examples 1-3 (EX1-EX3); in the ordinate the volume of N₂ desorbed by the pores (DPV) is indicated, in the abscissa the pore diameter (D);
- figure 4: distribution diagram of the pore dimensions of the silica-alumina of Example 3 (EX3); in the ordinate the volume of N₂ desorbed by the pores is indicated in logarithmic scale (dv(log D)), in the abscissa the pore diameter (D) in logarithmic scale;
- figure 5: profile of temperature programmed desorption (TPD) of ammonia of the silica-alumina of Example 3 (EX3) and a silica-alumina of the state of the art (ST); the curve T represents the desorption temperature increase. The graph shows the signal relating to the desorption (ordinate) in relation to the desorption time (abscissa);
- figure 6: cumulative desorption curves of the pores according to the model BJH of the silica-alumina compositions of Examples 4 and 5 (EX4 and EX5); in the ordinate the volume of N₂ desorbed by the pores is indicated, in the abscissa the pore diameter (D);
- figure 7: X-ray diffractometric analysis of a gelification initiator consisting of bohemite (Pural KR, Sasol);
- figure 8: 27 Al-NMR spectrum of the silica-alumina of Example 3 (non-calcined powder).

The process, object of the present invention, provides for the co-precipitation of a silica-alumina composition starting from a corresponding silica-alumina sol.

The silica-alumina sol is obtained by mixing an aqueous solution of a silicon compound and an aqueous solution of an aluminium compound capable of respectively producing SiO₂ and Al₂O₃ by co-precipitation (phase a)).

The silicon and aluminium compounds which can be used for preparing the solutions to be mixed in phase a) of the process can have different solubility degrees in water. For the purposes of the present invention, the term "aqueous solution" is therefore used for indicating, indifferently, an aqueous solution or a dispersion in water of the silicon and aluminium compounds, regardless of their effective solubility degree in water under the conditions of use.

Examples of silicon compounds which are preferably used for the purposes of the present invention, due to their solubility in water under the conditions of use, are: sodium silicate, silicic acid, colloidal silica, sodium tetraethylorthosilicate. Sodium silicate is particularly preferred, in particular sodium silicate having a SiO₂/Na₂Oweight ratio ranging from 1.9 to 2.2.

Other silicon compounds which can be used for the purposes of the present invention are: finely subdivided precipitated silica or fumed silica. These compounds have a lower solubility in water under the conditions of use with respect to the silicon compounds previously indicated.

Examples of aluminium compounds which are preferably used for the purposes of the present invention, due to their solubility in water under the conditions of use, are: sodium aluminate, acid aluminium salts (for example, aluminium sulfate, aluminium nitrate, aluminium chloride) or aluminium alkoxides.

Other aluminium compounds which can be used for the purposes of the present invention are: amorphous aluminium hydroxides (Al(OH)₃), or oxides of aluminium hydrate (bohemite). These compounds have a lower solubility in water under the conditions of use with respect to the aluminium compounds previously indicated.

The Applicant has surprisingly found that by mixing aqueous solutions of the above silicon and aluminium compounds in the presence of a gelification initiator comprising finely subdivided solid alumina hydrate, silica-alumina can be obtained, having unexpected and advantageous morphological and physico-chemical characteristics. In particular, the presence of the above gelification initiator allows an amorphous silica-alumina to be obtained, having a high homogeneity, in which other crystalline phases detectable by X-ray diffractometric analysis are substantially absent.

The presence of the above gelification initiator allows a silica-alumina to be obtained, having a substantially mesoporous structure and a high total pore volume. For the purposes of the present invention, the term "mesopores" refers to pores having a diameter ranging from 20 Å e 500 Å.

The gelification initiator comprises, or is composed of solid alumina hydrate having the formula Al₂O₃•nH₂O, wherein n varies from 1 to 3, preferably from 1 to 2.5. The alumina hydrate, when used in the solid state, is in the form of a finely subdivided powder, i.e. in the form of powder comprising aggregates having dimensions ranging from 1 to 200 microns, preferably from 10 to 100 microns (measured with granulometric analysis techniques by means of laser diffraction).

The alumina hydrate, however, under the silica-alumina synthesis conditions, in particular when it is in aqueous solution with a pH lower than 6.5, at least partially dissolves forming a colloidal dispersion of particles having average dimensions lower than 1 micron, preferably within the range of 100-200 nm (measured by means of light scattering techniques).

The gelification initiator can be used in solid form, adding it in powder form directly to the mixture of solutions comprising the silicon and aluminium compounds. Alternatively, the gelification initiator can be used in the form of an aqueous dispersion to be added to the other ingredients of the reaction mixture.

The alumina hydrate which can be used for the purposes of the present invention is known in the state of the art and is commercially available. The gelification initiator preferably comprises, or is composed of, alumina hydrate in the form of bohemite or pseudo-bohemite crystals (for example, the commercial products Pural KR®, Pural SB®, Catapal A® and Catapal B® produced by the same Applicant).

Alternatively, the finely subdivided solid alumina hydrate used as gelification initiator can be prepared by precipitation from an aqueous solution of an aluminium salt (for example, aluminium sulfate or chloride) and an aluminate (for example, sodium aluminate).

The dispersion comprising the solid alumina hydrate thus obtained can be added to the mixture of solutions comprising the silicon and aluminium compounds to form a silica-alumina sol.

Phase b) of the process, object of the present invention, provides for the addition of a basifying agent to the silica-alumina sol obtained in phase a), to co-precipitate an amorphous silica-alumina composition.

Examples of basifying agents which can be used in phase b) are aqueous solutions of NaOH, KOH, NH₄OH, (NH4) ₂CO₃ .

The co-precipitation phase b) can be carried out under acid, base or neutral conditions. The co-precipitation phase b) is preferably effected at acid pH, as in this way a more homogeneous end-product is obtained, which is substantially free of further crystalline phases.

When the co-precipitation phase b) is carried out under neutral or base pH conditions, the end-product is contaminated by small quantities of bohemite or pseudo-bohemite.

In order to effect phase b) at a certain pH, for example acid pH, the volumetric flow-rate of the basifying agent which is added to the silica-alumina sol can be suitably controlled. The volumetric flow-rate of the basifying agent introduced into the reaction mixture must be such that the pH of the reaction mixture remains, during the co-precipitation:
(i) at values lower than 6.5, when the co-precipitation is effected under acid conditions;
(ii) at values of 6.5 ≤ pH ≤ 7.5, when the co-precipitation is effected at neutral pH;
(iii) at values higher than 7.5, when the co-precipitation is effected at base pH.

The selection of the most suitable volumetric flow-rate of the solution of basifying agent for obtaining the above pH conditions can be easily determined by experts in the field, taking into consideration the concentration and volumetric flow-rate of the other components of the reaction mixture.

The pH conditions of the silica-alumina sol at which the addition of the basifying agent is effected, however, does not substantially affect the porosity characteristics of the silica-alumina.

With the process, object of the present invention, amorphous silica-alumina can be obtained, having the porosity, surface area and acidity characteristics described above within a wide range of values of the Si/Al molar ratio. More specifically, the Si/Al molar ratio can vary from 0.04 e 7.6. The Si/Al ratio preferably ranges from 0.05 to 5, even more preferably from 1.2 to 2.0.

The aqueous solutions of silicon compounds used in the process object of the present invention, comprise said compounds in a quantity ranging from 2% to 15% by weight of silicon expressed as SiO₂, preferably from 5% to 10%.

The aqueous solutions or dispersions of aluminium compounds capable of producing Al₂O₃ by hydrolysis, on the other hand, comprise said compounds in a quantity ranging from 5% to 25% by weight of Al expressed as Al₂O₃, preferably from 5% to 10%.

The quantity of initiator comprising finely subdivided solid alumina hydrate present during the mixing of phase a) is lower than 0.1% by weight of Al₂O₃, with respect to the total weight of the aqueous solution of the aluminium compound, preferably lower than 0.05%, more preferably ranging from 0.01% to 0.02%.

The mixing order of the various reagents in phase a) does not substantially influence the properties of the end-product, the only essential condition being that the mixing of the solutions of silicon and aluminium compounds (phase a)) be effected from the start in the presence of the gelification initiator. It is therefore possible, for example, to prepare a dispersion comprising a gelification initiator in the presence of an acid and simultaneously add the solutions comprising the silicon and aluminium compounds to this, or first mix the gelification initiator with the solution containing the silicon compound (or aluminium compound) and subsequently introduce the solution containing the aluminium compound (or silicon compound).

In a preferred embodiment of the invention, phase a) is carried out under acid pH conditions. For this purpose, in the mixing phase a), an aqueous solution of an aluminium compound (for example an aqueous solution of aluminium sulfate) is first prepared, at the desired concentration and, maintaining the above solution under vigorous stirring (for example with an anchor impeller), the gelification initiator consisting of finely subdivided solid alumina hydrate, is subsequently added. An aqueous solution containing a mineral acid (for example hydrochloric acid, nitric acid or sulfuric acid) is then added to this mixture. The aqueous solution comprising a silicon compound (for example sodium silicate) having a suitable concentration for obtaining the desired Si/Al molar ratio, is subsequently added to the solution thus acidified.

If sodium silicate is used, it must be considered that its addition to the reaction mixture leads to an increase in the pH of the silica alumina sol which is being formed. In this case therefore, if the co-precipitation phase b) is to be effected under acid pH conditions, the mineral acid must be present in a sufficient quantity for balancing the quantity of OH⁻ ions produced by hydrolysis. If the quantity of acid added is not sufficient, the introduction of sodium silicate into the reaction mixture can lead to an increase in the pH up to values higher than 7, with the consequent formation of a less homogeneous silica-alumina, as it is contaminated by a crystalline phase of bohemite.

The best results in terms of homogeneity of the silica-alumina, i.e. absence of undesired crystalline phases, are obtained when the H⁺/OH⁻ molar ratio ranges from 0.4 to 0.6, wherein H⁺ is the number of equivalent moles of mineral acid introduced into the mixture and OH⁻ is the number of moles of OH⁻ ions generated by hydrolysis by the addition of sodium silicate. Under optimum conditions, the pH of the silica-alumina sol at the end of the mixing phase is preferably within the range of 2.8-3.3.

In order to obtain a homogeneous silica-alumina, the sodium silicate is added to the mixture comprising the solution of the aluminium compound and gelification initiator (phase a) at a volumetric flow-rate which is such as to limit, as much as possible, the fluctuations of the pH. The most suitable volumetric flow-rate can be easily determined by an expert in the field, analogously to what is illustrated in the case of the volumetric flow-rate of the basifying agent introduced in phase b).

In order to maximize the effectiveness of the mixing, it is advantageous to use a liquid distribution device capable of introducing the solution of sodium silicate at a high turbulence point inside the reactor in which the synthesis process is being carried out. At the end of the mixing phase a), a slightly opalescent and homogeneous silica-alumina sol is obtained.

In phase b) of the process, the co-precipitation of the silica-alumina is effected by the addition of a basifying agent, for example a solution of ammonium carbamate, to the silica-alumina sol.

The introduction of the basifying agent into the reaction mixture is preferably effected maintaining a volumetric flow-rate which is such as to obtain the complete co-precipitation of the silica-alumina at a pH lower than or equal to 6.5, preferably lower than 5, more preferably lower than 4.

Phases a) and b) of the process described above are effected maintaining the reaction mixture at a temperature ranging from 20°C to 90°C, preferably from 50°C to 60°C.

The resulting mixture which contains the co-precipitated silica-alumina is subjected to filtration under vacuum (or by means of other conventional techniques) to separate and recover the solid fraction from the liquid fraction. The solid fraction is washed with demineralized water to remove the excess of non- reacted salts. The filtration is preferably effected maintaining the mixture to be filtered at a temperature of 80-90°C to facilitate the removal of the above non- reacted salts. The hot filtration does not substantially influence the final characteristics of the silica-alumina obtained.

The solid fraction obtained from the filtration is dried at a temperature ranging from 100°C to 130°C with the help of conventional drying techniques (for example, by means of a contact dryer or spin flash dryer).

It has been observed that when the drying is effected by means of a dryer such as a contact dryer, a silica-alumina is produced in powder form consisting of substantially irregular-shaped and non-friable agglomerates. The average dimension of the above agglomerates is in the order of 100-150 microns.

The process, object of the present invention, can be carried out with the same results on both a laboratory scale and also in industrial reactors of the conventional type. In order to obtain a high homogeneity of the end-product, it is particularly important to guarantee that there are conditions of high turbulence in the reaction environment, in order to obtain a thorough mixing of the reagents, in both phase a) and in phase b). When the turbulence is not optimum, in fact, clots can be formed which lead to the contamination of the end-product with undesired crystalline phases, for example bohemite, and therefore a less homogeneous end-product.

On a laboratory scale, an adequate turbulence can be obtained through mechanical stirring of the reagent mixture, for example by means of an anchor impeller.

For productions on an industrial scale, reactors equipped with a mechanical stirrer can be used, for example, at a variable rotation rate and equipped with suitable distribution devices for feeding the reagents close to the stirrer.

As already indicated, in order to avoid or at least reduce the presence of undesired crystalline phases to the minimum, in addition to controlling the turbulence degree of the reaction mixture, the volumetric flow-rate with which the various components of the reaction mixture are fed to the reactor, can also be controlled.

The process, object of the present invention, allows a silica-alumina composition to be obtained, having the following specific physico-chemical characteristics.

The silica-alumina compositions which can be obtained with the process, object of the present invention, typically have a total pore volume higher than 0.9 cm³/g, preferably higher than 1 cm³/g, more preferably ranging from 1.1 cm³/g to 1.3 cm³/g.

The porous structure of the silica-alumina compositions which can be obtained with the process of the present invention, has the following characteristics:
- the percentage of pores with a diameter less than 100 Å is lower than 30% of the total pore volume;
- the percentage of pores with a diameter greater than 500 Å is lower than 30% of the total pore volume;
- at least 30% of the total pore volume is due to pores with a diameter ranging from 200 Å to 300 Å.

The surface area of the silica-alumina compositions, object of the present invention, is within the range of 200 m²/g to 450 m²/g, preferably from 300 m²/g to 450 m²/g.

The process, object of the present invention, also allows silica-alumina compositions to be obtained, having acidity characteristics different from those of the silica-alumina compositions known in the state of the art.

The thermal activation of the silica-alumina, effected by heating under vacuum at 550°C for at time of about 3 hours, leads to the formation of acid sites having a strength comparable to those of zeolite materials. The presence of strong acid sites is revealed by temperature programmed adsorption/desorption (TPD) measurements of ammonia, as better illustrated in the following examples.

The amorphous silica-alumina compositions which can be obtained with the process, object of the present invention, can be used as catalysts or catalyst carriers. Thanks to the specific physico-chemical characteristics, in particular the presence of strong acid sites, the silica-alumina compositions of the present invention can be used as catalysts in the industrial processes indicated above, such as for example oligomerization, alkylation and hydrocracking processes.

When used as catalysts, the silica-alumina compositions which can be obtained with the process of the present invention can possibly also comprise metals dispersed on the surface.

The silica-alumina compositions can also be used for the preparation of extruded products, spheres or in a combination with other inorganic, organic oxides and/or amorphous or crystalline silico-aluminates, zeolites, according to the techniques known to experts in the field.

The average pore dimensions and high absorption capacity of gaseous or liquid molecules deriving from the high total pore volume available of the silica-alumina compositions, can also be exploited for accommodating in high quantities, large-dimensioned molecules and having a high molecular weight. In particular, these characteristics make the silica-alumina compositions which can be obtained with the process, object of the present invention, particularly suitable as carriers for enzymatic catalysts in production processes of biodiesel.

The silica-alumina compositions which can be obtained with the process of the present invention can also be used in the preparation of coating materials, adsorbing materials, materials for surface treatment for the production of ceramic, refractory materials and for reinforcing ceramic, metallic, plastic and elastomeric materials, such as materials for scratch- resistant coatings, for polishing or for optical, electronic applications and in semiconductors. Further applications comprise the use of silica-alumina in the preparation of abrasives, carriers for the administration of pharmaceutical active principles, thickening agents and rheological modifiers, additives for improving the fluidity characteristics of compounds in powder form, additives for improving the heat transfer properties of fluids and solids, additives for controlling or modifying the thermal expansion properties, polishers for dishwashers, additives in paper production processes and processes for the treatment of fabrics, resistant coatings for the ground and flame-retardants.

The following embodiment examples are provided for purely illustrative purposes of the present invention and should not be considered as limiting the protection scope defined by the enclosed claims.

### CHARACTERIZATION OF THE SILICA-ALUMINA COMPOSITIONS

The chemical composition of the silica-alumina samples was determined by means of elemental analysis with the AES-ICP technique.

The distribution data of the pore dimensions, total pore volume (Vₜₒₜ) , expressed as cm³/g, and surface area (Aₛᵤₚ), expressed as m²/g, indicated in the present description were obtained through nitrogen adsorption measurements on samples calcined at 550°C for 3 hours and subsequently degassed under vacuum at 300°C for 16 hours. The surface area values (Aₛᵤₚ) were calculated starting from N₂ adsorption data using the BET equation. The total pore volume (Vₜₒₜ) corresponds to the volume of gaseous nitrogen adsorbed to saturation (at a relative pressure p/p₀ equal to 0.992, wherein p is the measurement pressure and p₀ is the saturation pressure). The distribution of the pore dimensions was calculated on the basis of the desorption isotherm of the nitrogen according to the BJH model. The percentage (P) of the total pore volume corresponding to a certain pore diameter range (IDP) was determined through the equation P = 100*ΔV/Vp, wherein ΔV (expressed in cm³/g) is the increase in the pore volume within the IDP range and Vₚ is the pore volume value determined by means of the desorption isotherm with the BJH model. The average pore diameter (Dₘₚ), expressed in Å, was calculated with the following formula: Dₘₚ = (4·Vₜₒₜ/Aₛᵤₚ) 10000.

The X-ray diffraction measurements were effected with an X' Pert Philips instrument. The presence of bohemite was verified using a standard silica and alumina reference containing known quantities of bohemite. The bohemite content of the samples was evaluated on the peak, if present, at a value of 2- theta of about 49 degrees.

The acidity characteristics were evaluated by means of temperature programmed ammonia adsorption/desorption measurements (TPD). The adsorption of NH₃ was effected at 100°C, followed by the subsequent desorption of NH₃ by progressive heating (10°C/min) up to a temperature of 500°C. The release of NH₃ was monitored with the help of a thermal conductivity detector (TCD).

The quantity of acid sites (mmol/g) present is proportional to the extension of the area subtended at the desorption curve. The temperature at which a desorption peak is observed, on the other hand, represents an index of the acid strength of the sites, this strength being proportional to the temperature value of the desorption peak.

### EXAMPLE 1

A first sample of silica-alumina (EX1) was prepared as follows: 5.62 kg of a solution of aluminium sulfate (having an aluminium content equal to 4.73% by weight, expressed as Al₂O₃) were charged into a thermostat-regulated steel reactor (20 litres). The reactor is equipped with an anchor stirrer (10 cm in diameter) to produce an adequate turbulence during the mixing. The shaft of the stirrer can rotate at such a rate that the linear velocity of the outermost point of the stirrer is 42 cm/s.

After introducing the aluminium solution, 0.588 kg of a solution of nitric acid (at 65% by weight of HNO₃) were introduced into the reactor. The above quantity of acid was introduced into the reactor with a constant volumetric flow-rate over a period of 5 minutes.

The mixture thus obtained was heated to 50°C and kept under stirring. 7.5 g of gelification initiator consisting of bohemite powder (Pural SB, Sasol), comprising aggregates having a variable diameter within the range of 10-100 microns, were introduced at this temperature. The quantity of gelification initiator dispersed in the mixture corresponds to 0.09% by weight of Al₂O₃ with respect to the total weight of the solution of aluminium sulfate.

The reaction mixture was kept under stirring for 15 minutes, obtaining a slightly opalescent alumina sol. 12.45 kg of a solution of sodium silicate (at 4.42% by weight of SiO₂ and 2.39% by weight of Na₂O) were then introduced into the reactor with a constant volumetric flow-rate, over a period of 36 minutes. The introduction of the solution of sodium silicate into the reactor was effected by means of a distribution device consisting of a duct having an outlet situated close to the bottom of the reactor, capable of introducing the solution into the reaction mixture at a point slightly below the anchor stirrer. At the end of the addition of the solution of sodium silicate, the reaction mixture was in the form of an opalescent silica-alumina sol having the following characteristics:
- molar ratio SiO₂/Al₂O₃ = 3.5,
- pH = 2.9,
- molar ratio H⁺/OH⁻ ₌ 0.63,
wherein H⁺ is the number of equivalent moles of HNO₃ and OH⁻ is the number of moles of OH⁻ ions produced by hydrolysis (corresponding to the number of moles of sodium ions of the sodium silicate).

0.65 kg of a solution of ammonium carbonate (25% by weight) were added to the silica-alumina sol thus obtained, kept under stirring at a temperature of 50°C.

The ammonium carbonate was introduced into the reaction mixture at a constant rate over a period of 52 minutes. The addition of ammonium carbonate caused the co-precipitation of the silica-alumina and the progressive increase in the pH of the mixture from 2.9 to 7.0.

The mixture containing the silica-alumina was heated to 90°C and kept under stirring for a further 15 minutes.

The mixture was then filtered under vacuum and the solid was washed with demineralized water. The solid was then dried in an oven at 100°C for about 3 hours and finally left exposed to the air.

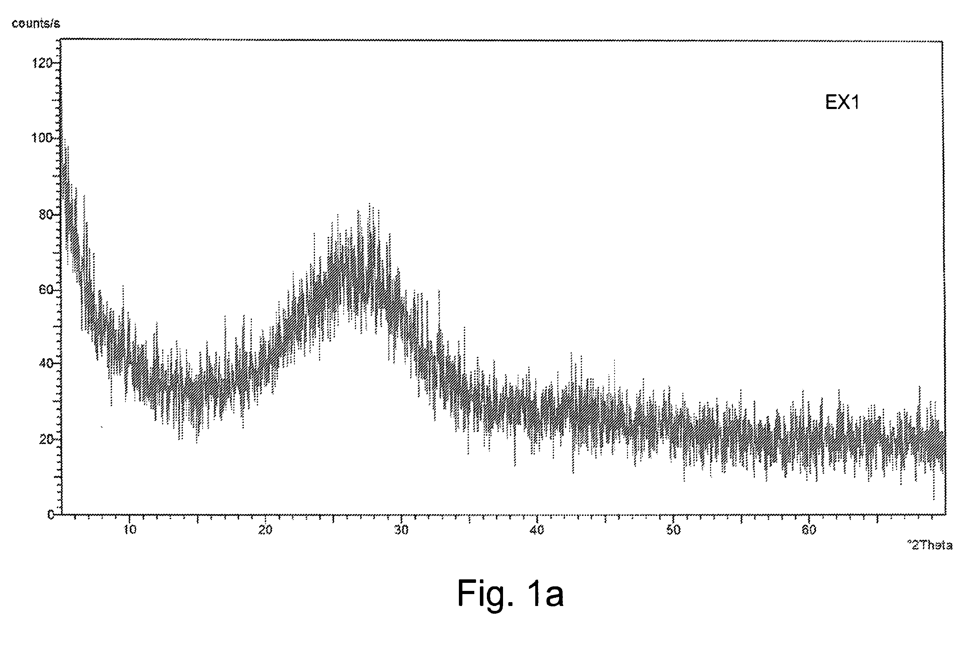

X-ray diffractometric analysis (Figure 1a) identified the solid synthesis product as an amorphous silica-alumina. The diffractometric analysis did not reveal the presence of crystalline phases, in particular bohemite.

Elemental analysis of the silica-alumina determined a SiO₂/Al₂O₃ weight ratio equal to 2.03 (Si/Al = 1.73 moles/moles), a sodium content equal to 0.97% by weight and a sulfur content equal to 0.0212% by weight.

The data relating to the distribution of the pore dimensions, total pore volume and other characteristics are indicated in Table 1.

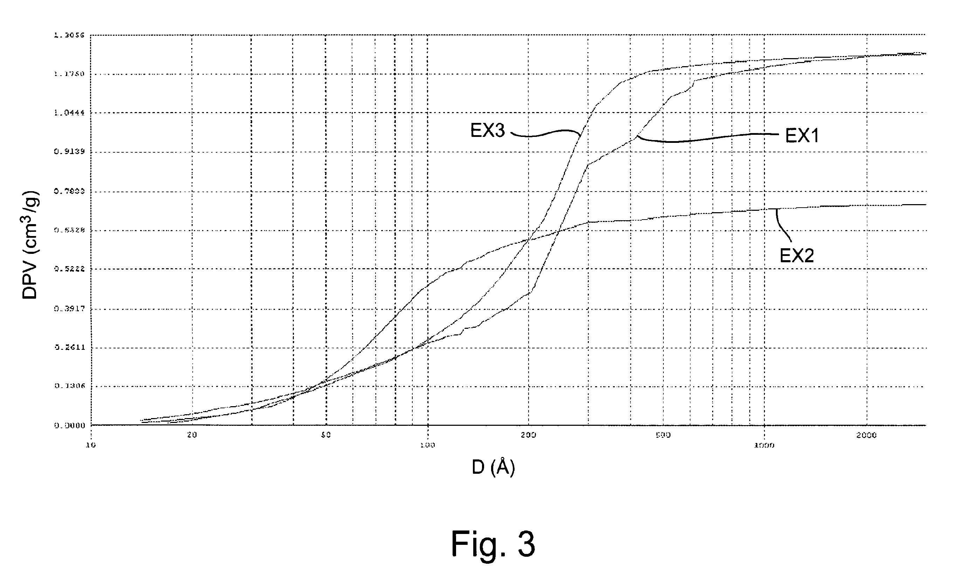

The total pore volume proved to be 1.26 cm³/g. The pore distribution indicates an average pore diameter of about 122 Å and a distribution of the pore dimensions, wherein about 78% of the total pore volume has a diameter higher than 100 Å. The diagram relating to the cumulative desorption curve of the pores (BJH) is illustrated in figure 3.

### EXAMPLE 2 (comparative)

A second sample of silica-alumina (EX2) was prepared following the same procedure described in Example 1, without, however, introducing any gelification initiator into the mixture.

After introducing the solution of ammonium carbonate, the mixture containing the co-precipitated silica-alumina was filtered and the solid recovered was washed with demineralized water heated to 90°C and dried in an oven at 100°C for 3 hours.

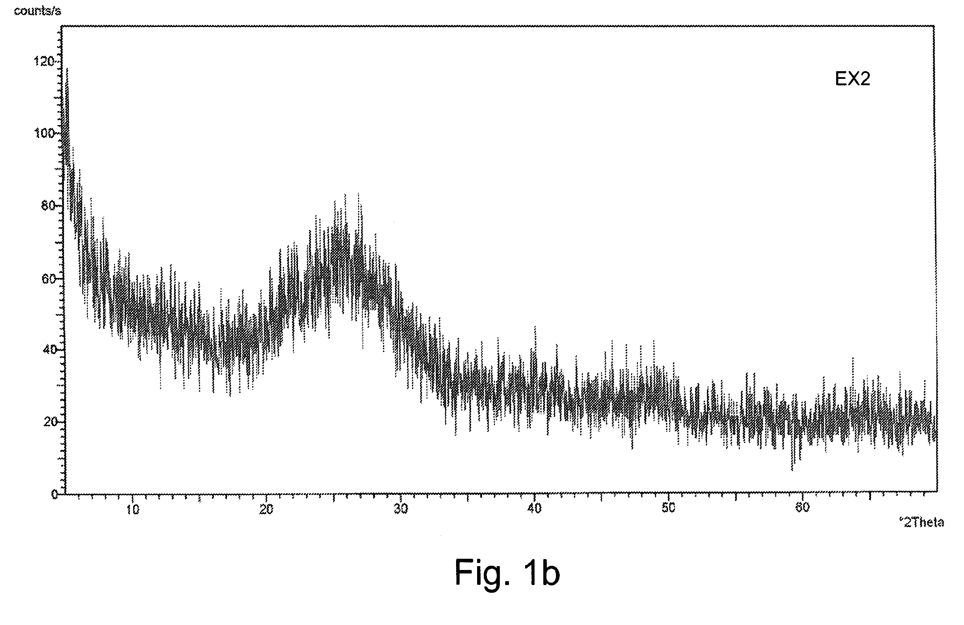

The structural characteristics of the silica-alumina thus obtained are indicated in Table 1. The silica-alumina proved to be amorphous upon X-ray diffractometric analysis (figure 1b). The total pore volume proved to be equal to 0.75 cm³/g The pore distribution revealed an average pore diameter of about 74 Å. A significant fraction of the total pore volume (62%) is due to pores with a diameter lower than 100 Å. The diagram relating to the cumulative desorption curve of the pores (BJH) is illustrated in figure 3.

### EXAMPLE 3

A third sample of silica-alumina (EX3) was prepared using a reactor equipped with two turbine-type impellers for guaranteeing a high mixing efficiency.

In order to increase the turbulence of the mixture during the mixing, the reactor is also equipped with a system for recirculating the reaction mixture inside the tank consisting of an external pump.

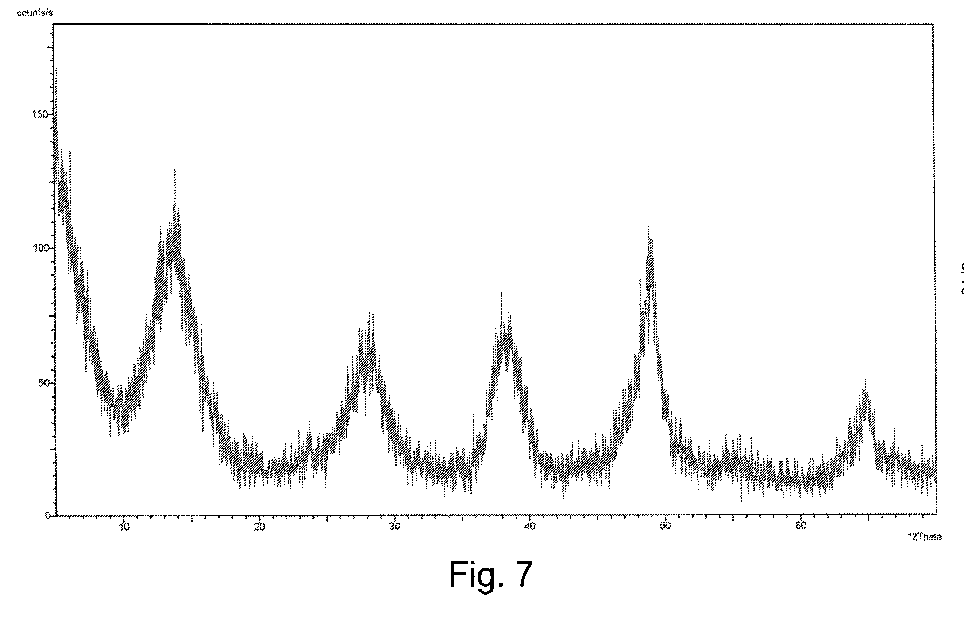

Commercial bohemite (Pural KR, Sasol), whose diffractogram is shown in figure 7, was used as gelification initiator.

1.2 m³ of a diluted aqueous dispersion of the above bohemite crystals (at 0.06% by weight of crystals) were introduced into the reactor. The liquid present on the bottom (so-called "foot") was heated to 55°C under stirring. 0.49 tons of a solution of aluminium sulfate (at 7% by weight of Al, expressed as Al₂O₃) having a temperature of 55°C, were then introduced. The concentration of aluminium sulfate in the reaction mixture is equal to 2.1% by weight, expressed as Al₂O₃, with respect to the total weight of the reaction mixture.

The reaction mixture was acidified by the addition of 75 kg of a solution of nitric acid at 42% by weight.

A solution of sodium silicate (at 8.9% by weight of SiO₂ and at 4.3% by weight of Na₂O) was introduced into the reaction mixture with a constant volumetric flow-rate. The solution of sodium silicate was introduced inside the reactor, at a high turbulence point of the mixture. The synthesis bath was consequently kept under continuous stirring and recirculation during all the process phases. The introduction of 0.8 tons of sodium silicate solution into the reaction mixture was completed over a period of 41 minutes.

A slightly opalescent silica-alumina sol having the following characteristics was obtained:
- molar ratio SiO₂/Al₂O₃ = 3.5,
- pH = 2,5,
- molar ratio H⁺/OH⁻ = 0.45,
wherein H⁺ is the number of equivalent moles of HNO₃ and OH⁻ is the number of moles of OH⁻ ions produced by hydrolysis (corresponding to the number of moles of sodium ions of the sodium silicate).

A solution of ammonium carbonate (25% by weight) was added to the silica-alumina sol thus obtained, kept under stirring at a temperature of 50°C. The introduction into the reactor was effected at a constant volumetric flow-rate, over a period of 50 minutes, thus guaranteeing the complete co-precipitation of the silica-alumina at a pH within the range of 4.0-5.0. The addition of the ammonium carbonate was prolonged until the pH had reached a value of 6.7. The mixture was kept under stirring and recirculated for 60 minutes at a temperature of 85°C, before being filtered in a vacuum filtration unit. The solid withheld by the filter was washed with demineralized water and then re-dispersed in a quantity of water which was such as to obtain a dispersion at about 15% by weight of solid. The dispersion was then subjected to drying in a contact dryer.

The structural characteristics of the silica-alumina thus obtained are indicated in Table 1.

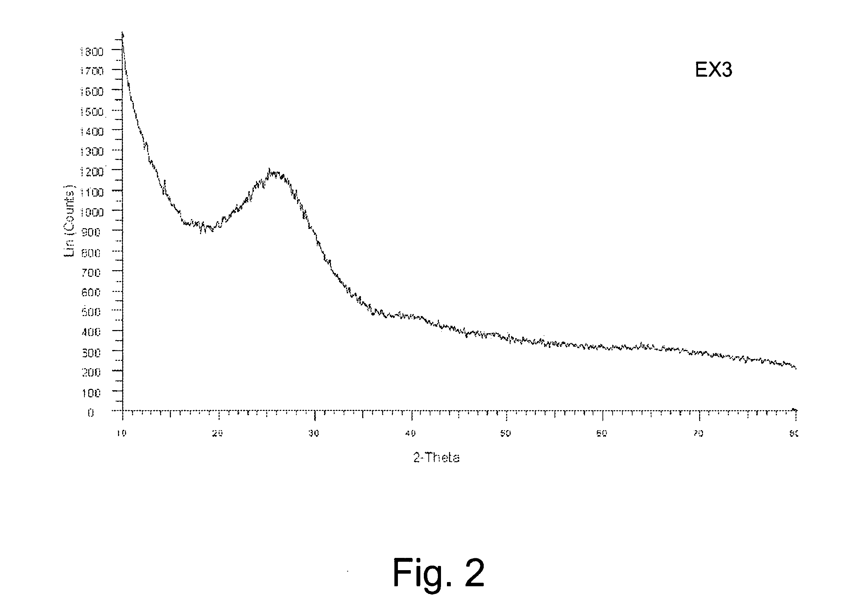

The sample proved to be amorphous upon X-ray diffractometric analysis (figure 2).

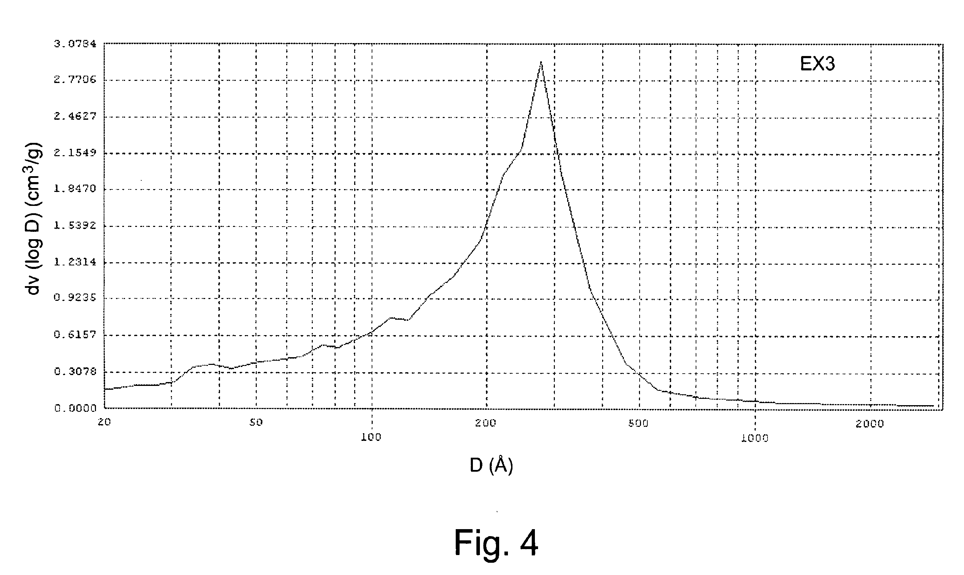

The total pore volume proved to be 1.25 cm³/g. The distribution of the pore dimensions reveals an average pore diameter of about 133 Å. Only 24% of the total pore volume is due to pores having a diameter lower than 100 Å. The total pore volume fraction due to pores having a diameter higher than 500 Å is negligible. The diagram relating to the distribution of the pore dimensions is illustrated in figure 4. The diagram relating to the cumulative desorption curve of the pores (BJH) is illustrated in figure 3.

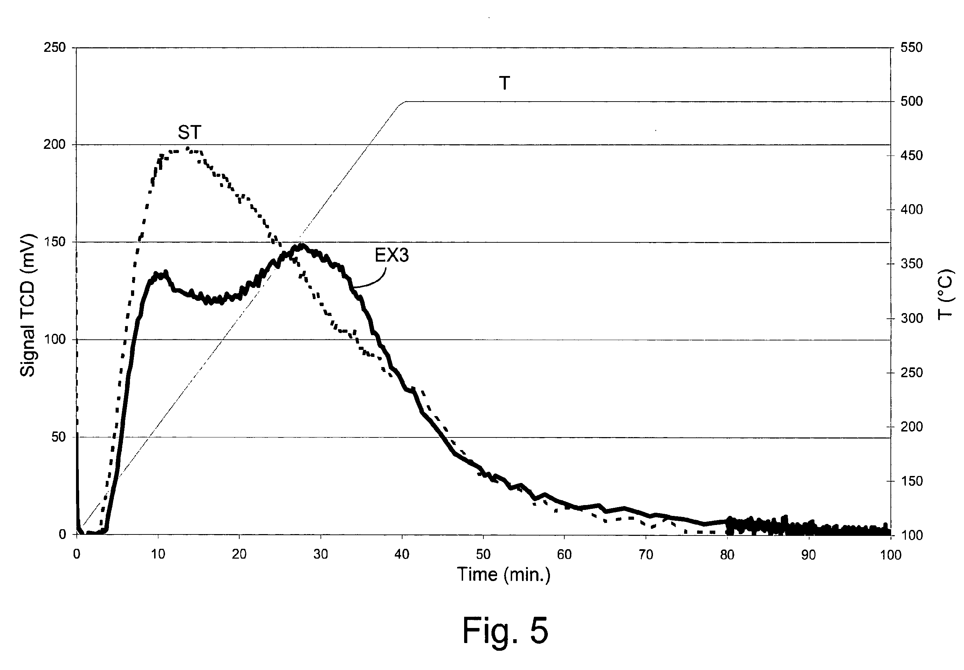

The acid properties of the silica-alumina sample were evaluated through TPD measurements of NH₃. The results are indicated in figure 5. The TPD profile shows two desorption peaks at two different temperatures attributable to two different types of acid sites: that at a lower temperature can be associated with sites having a lower acid strength; that with a higher temperature can be associated with sites having a higher acid strength.

The TPD profile of the silica-alumina obtained with the process, object of the present invention, is substantially different from that of the silica-alumina compositions known in the state of the art, whereas it is similar to profiles generally observed in zeolite materials and in silico-alumino-phosphates (see for example, Studies in Surface Science and Catalysis, 168, Elsevier, 3rd Ed., page 808).

The presence of strong acid sites is therefore a specific characteristic of the silica-alumina, object of the present invention.

From the TPD profile, it can observed that the total quantity of acid sites of the sample is equal as a whole to 0.327 mmol/g.

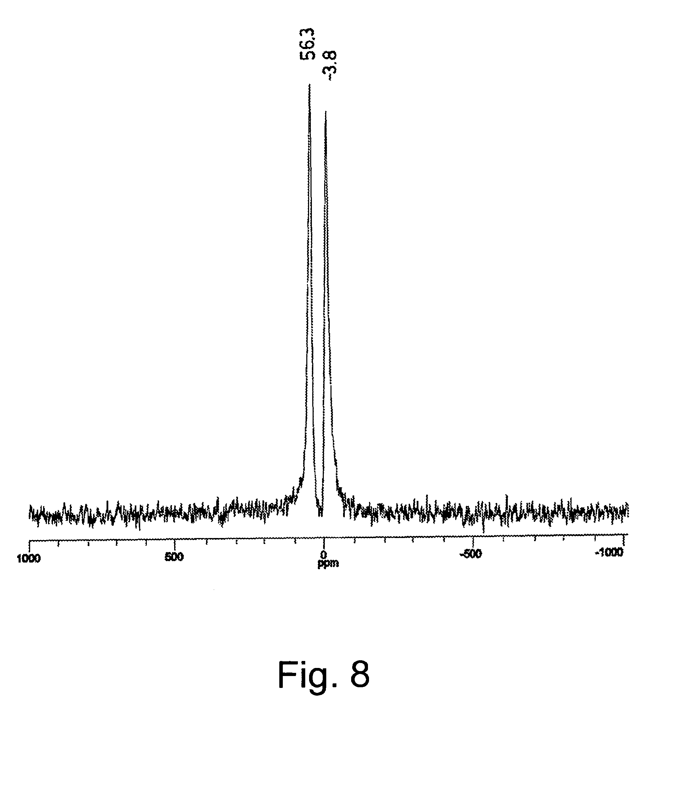

The ²⁷Al-NMR spectrum of the sample indicated in figure 8 shows two intense signals at 56.3 ppm and -3.8 ppm. The signal at 56.3 ppm is generally attributed in literature to Broensted acid sites associated with aluminium atoms in tetrahedral coordination [A104], i.e. incorporated in the crystalline lattice. The signal at -3.8 ppm, on the other hand, is generally attributed to Lewis acid sites associated with aluminium atoms in octahedral coordination [A106], i.e. aluminium atoms which could be localized outside the lattice (so-called "extraframework Al").

The catalytic properties of the silica-alumina EX3 were evaluated in the isomerization reaction of n-butane to isobutane with respect to a sample of a commercial mordenite zeolite (H-MOR CBV90A - Zeolyst Int.). The tests (Table 2) show that EX3 is active as catalyst, although its activity is lower than that of mordenite.

**Table 2**

| Sample | Conversion | Conversion |
|---|---|---|
| | temperature (°C) | (%) |
| EX3 | 350 | 1.7 |
| H-MOR | 250 | 2.5 |

### EXAMPLE 4

A fourth sample of silica-alumina (EX4) was prepared as follows: 990 g of demineralized water, 14 g of bohemite powder and 15 g of a solution of nitric acid (65% by weight) were charged in succession into a 2 litre-capacity steel reactor, equipped with a diathermic oil thermostat-regulated system and anchor stirrer connected to a rotor operating at a high rev number. The mixture was heated to 70°C. The following products were fed by means of dosage pumps, over an overall period of 50 minutes, at a constant volumetric flow-rate:
- 782 g of a solution of sodium silicate (at 10% of SiO₂ and at 4.8% of Na₂O),
- 272 g of a solution of aluminium sulfate having an Al content equal to 7% by weight, expressed as Al₂O₃ and
- 87 g of a solution of sodium aluminate containing Al in a quantity equal to 20% by weight, expressed as Al₂O₃, and 17% of Na₂O) .

The above solutions were introduced into the reactor simultaneously so as to maintain the pH within the range of values of 7 to 7.5, obtaining a silica-alumina sol.

Once the pH was stabilized, the sol was brought to pH 8.6 by an addition of a solution of sodium aluminate (about 3 g) and was subsequently filtered under vacuum. The solid fraction was washed abundantly with demineralized water heated to 90°C. The product was dried in a ventilated oven at a temperature of 110°C for 3 hours.

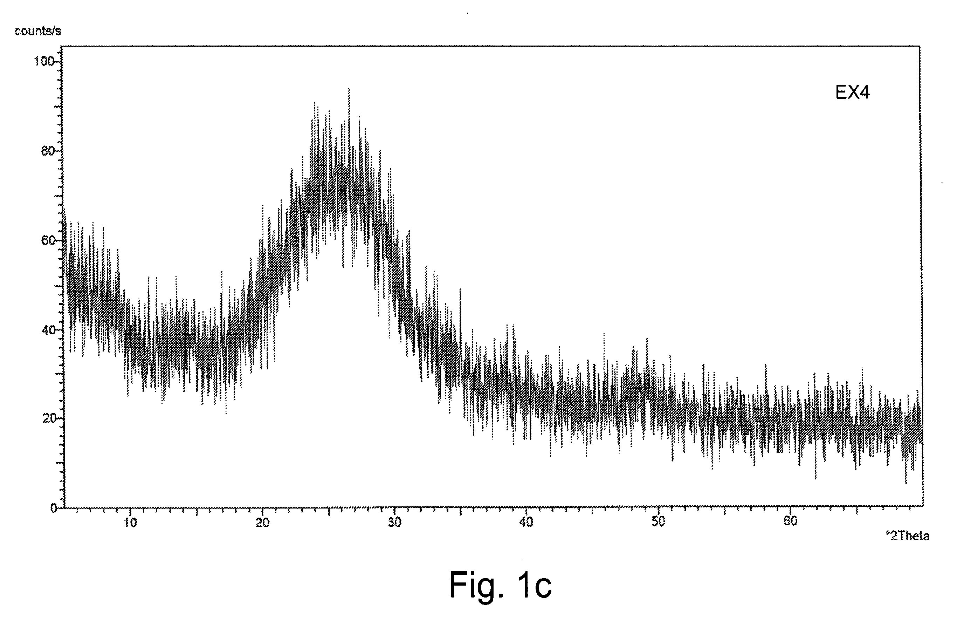

X-ray diffractometric analysis indicated that the silica-alumina thus obtained is prevalently amorphous and contains traces of bohemite (figure 1c). The total pore volume proved to be equal to 0.89 cm³/g, the surface area 255 m²/g.

The structural characteristics of the silica-alumina composition thus obtained are indicated in Table 1.

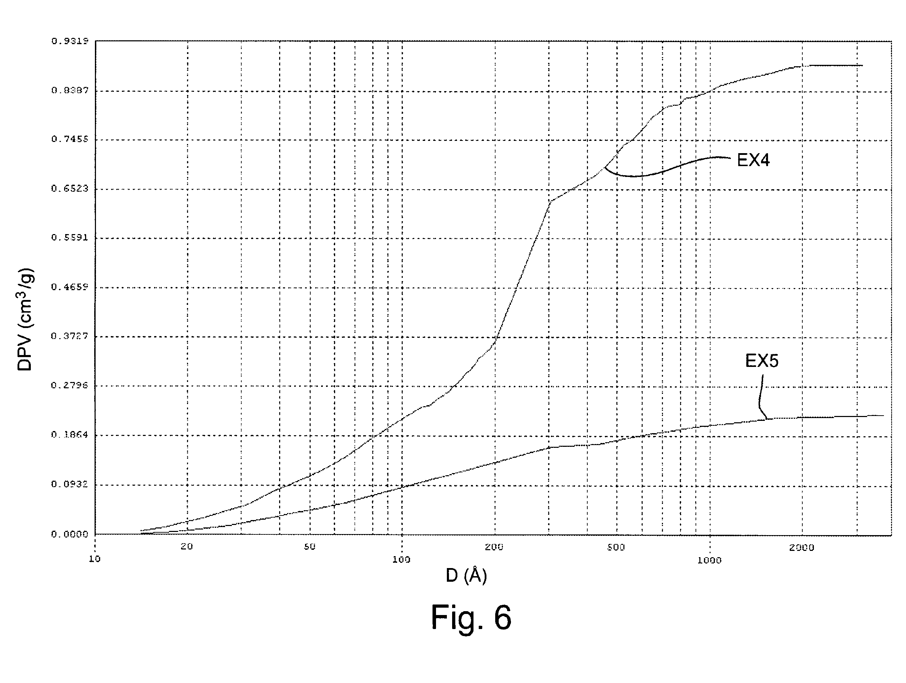

The diagram relating to the cumulative desorption curve of the pores (BJH) is illustrated in figure 6.

### EXAMPLE 5

A fifth sample of silica-alumina (EX5) was prepared following the same procedure described in Example 4, but without introducing any gelification initiator into the mixture.

A silica-alumina was obtained, which proved to be amorphous upon X-ray diffractometric analysis, containing traces of bohemite.

The total pore volume proved to be equal to 0.22 cm³/g. The surface area was 94 m²/g. In the graph of figure 5, the distribution of the pore dimensions is compared with that of the silica-alumina prepared in accordance with Example 4.

The structural characteristics and composition are indicated in Table 1.

**Table 1**

| | EX1 | EX2 | EX3 | EX4 | EX5 |
|---|---|---|---|---|---|
| SiO₂/Al₂O₃1 | 2.03 | 2.03 | 1.86 | 1.67 | 1.67 |
| Na (% by wt ) | 0.97 | 0.30 | 0.7 | 1.4 | n.d.² |
| S (%by wt) | 0.0212 | 0.039 | 0.04 | 0,040 | n.d.² |
| Presence bohemite | of NO | NO | NO | traces | traces |
| Mass density (g/cm³) | n.d.² | n.d. ² | 0.50 | n.d.² | n.d.² |
| Average particle diameter (µm) | 111 | 95 | 106 | n.d.² | n.d.² |
| | | | | | |
| | | | | | |

| | EX1 | EX2 | EX3 | EX4 | EX5 |
|---|---|---|---|---|---|
| Surface area (m²/g) | 411 | 403 | 377 | 255 | 94 |
| Total pore volume (cm /g) | 1.256 | 0.75 | 1.253 | 0.89 | 0.22 |
| Average pore diameter (Å) | 122 | 74 | 133 | 141 | 94 |
| Pore diameter < 30 Å¹ | 5.7 | 7.0 | 4.5 | 6.1 | 10.6 |
| Pore diameter 30-60 Å¹ | 7.9 | 23.0 | 9.4 | 7.9 | 13.6 |
| Pore diameter 60-100 Å¹ | 8.5 | 32.3 | 9.7 | 12.9 | 16.3 |
| Pore diameter 100-200 Å¹ | 13.4 | 19.9 | 27.2 | 14.2 | 26.5 |
| Pore diameter 200-300 Å¹ | 33.8 | 9.95 | 31.1 | 30.0 | 9.1 |
| Pore diameter higher than 300 Å^{1,2} | 30.7 | 6.8 | 18.1 | 28.9 | 26.3 |
| Pore diameter higher than 500 Å | 16.55¹ | 5.6¹ | 5.1¹ | 22.2¹ | 24.9¹ |

| | | | | | |
|---|---|---|---|---|---|
| ¹ Weight ratio. ² Non-determined value ¹ Percentage (P) of the pore volume referring to the pore volume calculated according to the model BJH (Vₚ) , Vₚ being the total cumulative volume determined by means of the BJH model from the desorption isotherm. ² The percentage of pores having a diameter higher than 300 Å also comprises that of pores having a diameter higher than 500 Å. | | | | | |

## Claims

1. A process for preparing an amorphous silica-alumina composition comprising the following operative phases:
a) mixing an aqueous solution comprising a silicon compound and an aqueous solution comprising an aluminium compound, in the presence of a gelification initiator comprising alumina hydrate having the general formula Al₂O₃·nH₂O, wherein n varies from 1 to 3, and obtaining a silica-alumina sol,
b) adding a base precipitating agent to said silica-alumina sol and co-precipitating a silica-alumina composition.

2. The process according to the previous claim, **characterized in that** the alumina hydrate is in the form of a colloidal dispersion with particles having average dimensions lower than 1 micron, preferably within the range of 100-200 nm.

3. The process according to the previous claim, **characterized in that** the gelification initiator comprises alumina hydrate having the general formula Al₂O₃·nH₂O, wherein n ranges from 1 to 2.5.

4. The process according to any of the previous claims, **characterized in that** said alumina hydrate is bohemite or pseudo-bohemite, preferably bohemite.

5. The process according to any of the previous claims, **characterized in that** said mixing phase a) is carried out in the presence of said gelification initiator under acid pH conditions, preferably within the range of 2.8-3.3.

6. The process according to any of the previous claims, **characterized in that** the base precipitating agent in phase b) is added to said silica-alumina sol, maintaining the pH of this at a value lower than or equal to 6.5, more preferably lower than 4, until the co-precipitation has been completed.

7. The process according to any of the previous claims, **characterized in that** said silicon compound is selected from the group consisting of sodium silicate, silicic acid, colloidal silica, sodium tetraethylorthosilicate, precipitated silica or fumed silica, and is preferably sodium silicate with a SiO₂/Na₂O weight ratio ranging from 1.9 to 2.2.

8. The process according to any of the previous claims, **characterized in that** said aluminium compound is selected from the group consisting of sodium aluminate, acid aluminium salts, aluminium sulfate, aluminium nitrate, aluminium chloride, aluminium alkoxides, or amorphous aluminium hydroxide having the general formula Al(OH)₃.

9. The process according to any of the previous claims, **characterized in that** the solution or aqueous dispersion comprising the aluminium compound comprises said compound in a quantity varying from 5% to 25% by weight of Al, expressed as Al₂O₃, preferably from 5% to 10%.

10. The process according to any of the previous claims, **characterized in that** the solution or aqueous dispersion comprising the silicon compound comprises said compound in a quantity varying from 2% to 15% by weight of Si, expressed as SiO₂.

11. The process according to any of the previous claims, **characterized in that** said alumina hydrate is present in a quantity not higher than 0.1% by weight with respect to the weight of the solution comprising the aluminium compound, preferably lower than 0.05%, more preferably ranging from 0.01% to 0.02%.

12. The process according to any of the previous claims, **characterized in that** the mixing of phase a) is carried out as follows:
i) an aqueous solution of an aluminium salt is mixed with the gelification initiator comprising finely subdivided alumina hydrate;
ii) a mineral acid and subsequently an aqueous solution of sodium silicate, is added to the mixture thus obtained,
the quantity of acid added being such as to obtain an H⁺/OH⁻ molar ratio ranging from 0.4 to 0.6, wherein H⁺ is the number of equivalent moles of mineral acid added and OH⁻ is the number of moles of OH⁻ ions generated by hydrolysis by the addition of said sodium silicate solution.

13. The process according to the previous claim, **characterized in that** the pH of the silica-alumina sol obtained at the end of said mixing phase a) is preferably within the range of 2.8-3.3.

14. The process according to any of the previous claims, **characterized in that** at the end of said co-precipitation phase b), the co-precipitated silica-alumina composition is separated from the reaction mixture by filtration and dried with a contact dryer.

15. An amorphous silica-alumina composition having the following characteristics:
(A) the total pore volume is higher than 0.9 cm³/g and lower than 1.3 cm³/g;
(B) the percentage of pores with a diameter lower than 100 Å is less than 30% of the total pore volume; the percentage of pores with a diameter greater than 500 Å is less than 30% of the total pore volume; at least 30% of the total pore volume is due to pores with a diameter ranging from 200 Å to 300 Å;
(C) a surface area within the range of 200 m²/g to 450 m²/g, preferably from 300 m²/g to 450 m²/g.

16. A catalyst for a conversion reaction of hydrocarbons comprising an amorphous silica-alumina composition according to claim 15.

17. Use of alumina hydrate having the general formula Al₂O₃·nH₂O, wherein n varies from 0.5 to 3, as gelification initiator in a synthesis process of an amorphous silica-alumina composition.

## Patentansprüche

1. Verfahren zur Herstellung einer amorphen Siliciumdioxid-Aluminiumoxid-Zusammensetzung, das die folgenden Arbeitsstufen umfasst:
a) Mischung einer wässrigen Lösung, die eine Siliciumverbindung umfasst, und einer wässrigen Lösung, die eine Aluminiumverbindung umfasst, in Gegenwart eines Gelierungsinitiators, der Aluminiumoxidhydrat mit der allgemeinen Formel Al₂O₃ · nH₂O, wobei n von 1 bis 3 variiert, umfasst, und Erhalten eines Siliciumdioxid-Aluminiumoxid-Sols,
b) Zugabe eines basischen Fällungsmittels zu dem Siliciumdioxid-Aluminiumoxid-Sol und Mitfällung einer Siliciumdioxid-Aluminiumoxid-Zusammensetzung.

2. Verfahren nach dem vorhergehenden Anspruch, **dadurch gekennzeichnet, dass** das Aluminiumoxidhydrat in der Form einer kolloidalen Dispersion vorliegt, die Teilchen mit durchschnittlichen Abmessungen unter 1 Mikrometer, vorzugsweise im Bereich von 100 bis 200 nm, aufweist.

3. Verfahren nach dem vorhergehenden Anspruch, **dadurch gekennzeichnet, dass** der Gelierungsinitiator Aluminiumoxidhydrat mit der allgemeinen Formel Al₂O₃ · nH₂O umfasst, wobei n im Bereich von 1 bis 2,5 liegt.

4. Verfahren nach irgendeinem der vorhergehenden Ansprüche, **dadurch gekennzeichnet, dass** das Aluminiumoxidhydrat Böhmit oder Pseudoböhmit, vorzugsweise Böhmit, ist.

5. Verfahren nach irgendeinem der vorhergehenden Ansprüche, **dadurch gekennzeichnet, dass** die Mischstufe a) in Gegenwart des Gelierungsinitiators unter sauren pH-Bedingungen, vorzugsweise bei pH-Werten im Bereich von 2,8 bis 3,3, durchgeführt wird.

6. Verfahren nach irgendeinem der vorhergehenden Ansprüche, **dadurch gekennzeichnet, dass** das basische Fällungsmittel in der Stufe b) zum Siliciumdioxid-Aluminiumoxid-Sol hinzugegeben wird, wobei der pH-Wert desselben auf einem Wert kleiner oder gleich 6,5, bevorzugter kleiner als 4, gehalten wird, bis die Mitfällung abgeschlossen ist.

7. Verfahren nach irgendeinem der vorhergehenden Ansprüche, **dadurch gekennzeichnet, dass** die Siliciumverbindung aus der Gruppe, die aus Natriumsilicat, Kieselsäure, kolloidalem Siliciumdioxid, Natriumtetraethylorthosilicat, gefälltem Siliciumdioxid oder pyrogenem Siliciumdioxid besteht, ausgewählt wird und vorzugsweise Natriumsilicat mit einem SiO₂/Na₂O-Gewichtsverhältnis im Bereich von 1,9 bis 2,2 ist.

8. Verfahren nach irgendeinem der vorhergehenden Ansprüche, **dadurch gekennzeichnet, dass** die Aluminiumverbindung aus der Gruppe ausgewählt wird, die aus Natriumaluminat, sauren Aluminiumsalzen, Aluminiumsulfat, Aluminiumnitrat, Aluminiumchlorid, Aluminiumalkoxiden oder einem amorphen Aluminiumhydroxid mit der allgemeinen Formel Al(OH)₃ besteht.

9. Verfahren nach irgendeinem der vorhergehenden Ansprüche, **dadurch gekennzeichnet, dass** die Lösung oder wässrige Dispersion, welche die Aluminiumverbindung umfasst, diese Verbindung in einer Menge umfasst, die von 5 bis 25 Gew.-%, vorzugsweise von 5 bis 10 Gew.-%, von Al, ausgedrückt als Al₂O₃, variiert.

10. Verfahren nach irgendeinem der vorhergehenden Ansprüche, **dadurch gekennzeichnet, dass** die Lösung oder wässrige Dispersion, welche die Siliciumverbindung umfasst, diese Verbindung in einer Menge umfasst, die von 2 bis 15 Gew.-% von Si, ausgedrückt als SiO₂, variiert.

11. Verfahren nach irgendeinem der vorhergehenden Ansprüche, **dadurch gekennzeichnet, dass** das Aluminiumoxidhydrat in einer Menge von nicht mehr als 0,1 Gew.-%, vorzugsweise von weniger als 0,05 Gew.-%, bevorzugter im Bereich von 0,01 bis 0,02 Gew.-%, bezogen auf das Gewicht der Lösung vorliegt, welche die Aluminiumverbindung umfasst.

12. Verfahren nach irgendeinem der vorhergehenden Ansprüche, **dadurch gekennzeichnet, dass** das Mischen gemäß Stufe a) wie folgt ausgeführt wird:
i) eine wässrige Lösung eines Aluminiumsalzes wird mit dem Gelierungsinitiator vermischt, der fein verteiltes Aluminiumoxidhydrat umfasst;
ii) eine Mineralsäure und anschließend eine wässrige Natriumsilicat-Lösung werden dem so erhaltenen Gemisch zugegeben,
wobei die Menge der zugegebenen Säure derart ist, dass ein H⁺/OH⁻-Molverhältnis im Bereich von 0,4 bis 0,6 erhalten wird, wobei H⁺ die Zahl der äquivalenten Mol der zugegebenen Mineralsäure ist und OH- die Zahl der OH-Ionen-Mol ist, die durch das Zugeben der Natriumsilicat-Lösung durch Hydrolyse erzeugt werden.

13. Verfahren nach dem vorhergehenden Anspruch, **dadurch gekennzeichnet, dass** der pH-Wert des Siliciumdioxid-Aluminiumoxid-Sols, das am Ende der Mischstufe a) erhalten wird, vorzugsweise im Bereich von 2,8 bis 3,3 liegt.

14. Verfahren nach irgendeinem der vorhergehenden Ansprüche, **dadurch gekennzeichnet, dass** die mitgefällte Siliciumdioxid-Aluminiumoxid-Zusammensetzung am Ende der Mitfällungsstufe b) durch Filtration vom Reaktionsgemisch getrennt und mit einem Kontakttrockner getrocknet wird.

15. Amorphe Siliciumdioxid-Aluminiumoxid-Zusammensetzung mit den folgenden Eigenschaften:
(A) das Gesamtporenvolumen ist größer als 0,9 cm³/g und kleiner als 1,3 cm³/g;
(B) der Prozentsatz von Poren mit einem Durchmesser von weniger als 100 Å beträgt weniger als 30% des Gesamtporenvolumens; der Prozentsatz von Poren mit einem Durchmesser von mehr als 500 Å beträgt weniger als 30% des Gesamtporenvolumens; mindestens 30% des Gesamtporenvolumens ist auf Poren mit einem Durchmesser im Bereich von 200 Å bis 300 Å zurückzuführen;
(C) eine Oberfläche im Bereich von 200 m²/g bis 450 m²/g, vorzugsweise von 300 m²/g bis 450 m²/g.

16. Katalysator für eine Kohlenwasserstoffumwandlungsreaktion, der eine amorphe Siliciumdioxid-Aluminiumoxid-Zusammensetzung nach Anspruch 15 umfasst.

17. Verwendung von Aluminiumoxidhydrat mit der allgemeinen Formel Al₂O₃ · nH₂O, wobei n von 0,5 bis 3 variiert, als Gelierungsinitiator in einem Verfahren zur Synthese einer amorphen Siliciumdioxid-Aluminiumoxid-Zusammensetzung.

## Revendications

1. Procédé de préparation d'une composition de silice-alumine amorphe comprenant les phases opératoires suivantes :
a) le mélange d'une solution aqueuse comprenant un composé de silicium et d'une solution aqueuse comprenant un composé d'aluminium, en présence d'un initiateur de gélification comprenant de l'hydrate d'alumine ayant la formule générale Al₂O₃·nH₂O, où n varie de 1 à 3, et l'obtention d'un sol de silice-alumine,
b) l'ajout d'un agent de précipitation de base audit sol de silice-alumine et la co-précipitation d'une composition de silice-alumine.

2. Procédé selon la revendication précédente, **caractérisé en ce que** l'hydrate d'alumine est sous la forme d'une dispersion colloïdale avec des particules ayant des dimensions moyennes inférieures à 1 micron, de préférence dans la plage de 100-200 nm.

3. Procédé selon la revendication précédente, **caractérisé en ce que** l'initiateur de gélification comprend de l'hydrate d'alumine ayant la formule générale Al₂O₃-nH₂O, où n est dans la plage de 1 à 2,5.

4. Procédé selon l'une quelconque des revendications précédentes, **caractérisé en ce que** ledit hydrate d'alumine est la boehmite ou la pseudo-boehmite, de préférence la boehmite.

5. Procédé selon l'une quelconque des revendications précédentes, **caractérisé en ce que** ladite phase de mélange a) est exécutée en présence dudit initiateur de gélification dans des conditions de pH acide, de préférence dans la plage de 2,8-3,3.

6. Procédé selon l'une quelconque des revendications précédentes, **caractérisé en ce que** l'agent de précipitation de base dans la phase b) est ajouté audit sol de silice-alumine, en maintenant le pH de celui-ci à une valeur inférieure ou égale à 6,5, de manière davantage préférée inférieure à 4, jusqu'à ce que la co-précipitation ait été achevée.

7. Procédé selon l'une quelconque des revendications précédentes, **caractérisé en ce que** ledit composé de silicium est sélectionné dans le groupe comprenant le silicate de sodium, l'acide silicique, la silice colloïdale, le tétraéthylorthosilicate de sodium, la silice précipitée ou la silice pyrogénée, et est de préférence du silicate de sodium avec un rapport pondéral SiO₂/Na₂O dans la plage de 1,9 à 2,2.

8. Procédé selon l'une quelconque des revendications précédentes, **caractérisé en ce que** ledit composé d'aluminium est sélectionné dans le groupe comprenant l'aluminate de sodium, les sels acides d'aluminium, le sulfate d'aluminium, le nitrate d'aluminium, le chlorure d'aluminium, les alcoxydes d'aluminium ou l'hydroxyde d'aluminium amorphe ayant la formule générale Al(OH)₃.

9. Procédé selon l'une quelconque des revendications précédentes, **caractérisé en ce que** la solution ou la dispersion aqueuse comprenant le composé d'aluminium comprend ledit composé dans une quantité variant de 5% à 25% en poids d'Al, exprimé comme Al₂O₃, de préférence de 5% à 10%.

10. Procédé selon l'une quelconque des revendications précédentes, **caractérisé en ce que** la solution ou la dispersion aqueuse comprenant le composé de silicium comprend ledit composé dans une quantité variant de 2% à 15% en poids de Si, exprimé comme SiO₂.

11. Procédé selon l'une quelconque des revendications précédentes, **caractérisé en ce que** ledit hydrate d'aluminium est présent dans une quantité non supérieure à 0,1% en poids par rapport au poids de la solution comprenant le composé d'aluminium, de préférence inférieure à 0,05%, de manière davantage préférée dans une plage de 0,01% à 0,02%.

12. Procédé selon l'une quelconque des revendications précédentes, **caractérisé en ce que** la phase de mélange a) est exécutée comme suit :
i) une solution aqueuse d'un sel d'aluminium est mélangée avec l'initiateur de gélification comprenant de l'hydrate d'alumine finement subdivisé ;
ii) un acide minéral, et ensuite une solution aqueuse de silicate de sodium, est ajouté au mélange ainsi obtenu,
la quantité d'acide ajouté étant choisie pour obtenir un rapport molaire H⁺/OH⁻ dans la plage de 0,4 à 0,6, où H⁺ est le nombre d'équivalents molaires d'acide minéral ajoutés et OH⁻ est le nombre de moles d'ions OH⁻ générés par hydrolyse par l'ajout de ladite solution de silicate de sodium.

13. Procédé selon la revendication précédente, **caractérisé en ce que** le pH du sol de silice-alumine obtenu à la fin de ladite phase de mélange a) est de préférence dans la plage de 2,8-3,3.

14. Procédé selon l'une quelconque des revendications précédentes, **caractérisé en ce que**, à la fin de ladite phase de co-précipitation b), la composition de silice-alumine co-précipitée est séparée du mélange de réaction par filtration et séchée avec un séchoir par contact.

15. Composition de silice-alumine amorphe ayant les caractéristiques suivantes :
(A) le volume total de pores est supérieur à 0,9 cm³/g et inférieur à 1,3 cm³/g ;
(B) le pourcentage de pores avec un diamètre inférieur à 100 Â est inférieur à 30% du volume total des pores ; le pourcentage de pores avec un diamètre supérieur à 500 Â est inférieur à 30% du volume total des pores ; au moins 30% du volume total des pores est dû à des pores avec un diamètre dans la plage de 200 Â à 300 Â ;
(C) une surface dans la plage de 200 m²/g à 450 m²/g, de préférence de 300 m²/g à 450 m²/g.

16. Catalyseur pour une réaction de conversion d'hydrocarbures comprenant une composition de silice-alumine amorphe selon la revendication 15.

17. Utilisation d'un hydrate d'alumine ayant la formule générale Al₂O₃-nH₂O, où n varie de 0,5 à 3, comme initiateur de gélification dans un procédé de synthèse d'une composition de silice-alumine amorphe.
